# EUROPÄISCHE PATENTANMELDUNG

(11) **EP 4 280 315 A1**
(43) Veröffentlichungstag der Anmeldung: **22.11.2023**
(21) Anmeldenummer: 22174596.1
(22) Anmeldetag: 20.05.2022
(51) Int. Cl.: H01M 8/0213

(54) **VERFAHREN ZUM HERSTELLEN EINER BIPOLARPLATTE MIT GERINGEM GEWICHT FÜR EINE ELEKTROCHEMISCHE VORRICHTUNG**

(71) Anmelder: Airbus S.A.S., 31060 Toulouse (FR)
(72) Erfinder: Die Erfindernennung liegt noch nicht vor

(57) **Zusammenfassung**

Es wird ein Verfahren zum Herstellen einer Bipolarplatte für eine elektrochemische Vorrichtung vorgeschlagen, das Verfahren aufweisend Bereitstellen eines ersten Plattengrundkörpers und eines zweiten Plattengrundkörpers als Kohlestofffasern aufweisende Faserformkörper mit jeweils einer Fügefläche und einer davon abgewandten Nutzfläche, Infiltrieren der Plattengrundkörper mit mindestens einem Kohlenstoffallotropen, lokales Aufbringen von Silizium auf jeweilige Fügestellen in den Fügeflächen, Auflegen der Fügeflächen aufeinander, sodass die Fügestellen aufeinanderliegen und die Nutzflächen der beiden Plattengrundkörper voneinander abgewandt sind, und zumindest lokales Erhitzen der Fügestellen, sodass das Silizium aufschmilzt und mit angrenzendem Kohlenstoff zur Bildung von einer Silizium-Kohlenstoff-Verbindung reagiert.

## Beschreibung

### Technisches Gebiet

Die vorliegende Beschreibung betrifft ein Verfahren zum Herstellen einer Bipolarplatte für eine elektrochemische Vorrichtung, eine Bipolarplatte für eine elektrochemische Vorrichtung sowie eine elektrochemische Vorrichtung mit mindestens einer derartigen Bipolarplatte.

### Technischer Hintergrund

Eine elektrochemische Vorrichtung im Sinne der Erfindung kann insbesondere ein Brennstoffzellenstapel sein, der mehrere Brennstoffzellen aufweist, die mit Sauerstoff und Wasserstoff versorgt werden. Die elektrochemische Vorrichtung kann weiterhin auch ein Elektrolyseur sein, mit dem Sauerstoff und Wasserstoff erzeugt werden können. Brennstoffzellenstapel, sie beispielsweise in Fluggeräten eingesetzt werden, weisen oftmals PEM-Brennstoffzellen auf. Bei diesen ist eine grundlegende elektrochemische Funktionseinheit als sogenannte Membran-Elektroden-Einheit (oder "Membrane Electrode Assembly") realisiert, die einen Elektrolyten, diesen einschließende Anoden- und Kathodenkatalysatoren sowie außen daran anschließende Gasdiffusionslagen aufweist. Der Elektrolyt könnte bei Niedrigtemperatur-Brennstoffzellen etwa Nafion oder ähnliches umfassen. Bei Hochtemperatur-Brennstoffzellen können etwa mit Phosphorsäure dotierte Polybenzimidazole eingesetzt werden.

Die Bipolarplatten trennen einzelne elektrochemische Zellen fluidisch voneinander und realisieren gleichzeitig ihre elektrische Verschaltung. Die Bipolarplatten bestehen üblicherweise aus zwei zusammengefügten Hälften, können einen Kanal für eine Wasserkühlung der Brennstoffzellen aufweisen und dienen zusätzlich der elektrischen Ableitung. Auf beiden Seiten der Bipolarplatten sind feine Kanalstrukturen eingebracht, die als Strömungsfeld ("flow field") bezeichnet werden und dazu dienen, großflächig Wasserstoff an die Anode und Sauerstoff bzw. Luft zu der Kathodenseite zu führen. Die Bipolarplatten sind daher wesentliche aktive Komponenten eines Brennstoffzellenstapels.

Ein oft verwendetes Material für Bipolarplatten ist Edelstahl mit einem spezifischen Gewicht bis 8 g/cm³. Diese metallischen Bipolarplatten verursachen je nach Dicke bis zu etwa 70% des Gewichts eines Brennstoffzellenstapels.

Bei der Herstellung einer Bipolarplatte werden üblicherweise zwei separate Plattenhälften bereitgestellt und miteinander verschweißt. Zum Einbringen der Strömungsfelder sind mechanische Verfahren verbreitet. So können etwa Strömungsfelder durch Prägeverfahren in die einzelnen Plattenhälften eingebracht werden. Vereinzelt werden auch Bipolarplatten aus einer Titan-Basislegierungen eingesetzt. Damit ist möglich, das Gewicht der Bipolarplatten etwa auf die Hälfte zu reduzieren. Allerdings ist die Herstellung problematisch, da zum einen besonders dünne Titanfolien mit einer Wandstärke von unter 150 µm schwer verfügbar sind und das Verschweißen dieser Folien aufwendig ist.

Metallische Bipolarplatten benötigen weiterhin eine Korrosionsschutzschicht. Zur Gewährleistung der eigentlichen Aufgabe der Bipolarplatte muss diese elektrisch leitfähig sein. Dies kann etwa durch Nickel, Molybdän, Tantal oder Mischungen hiervon realisiert werden. Beschichtungsverfahren können etwa die physikalische oder chemische Gasphasenabscheidung (PVD bzw. CVD), thermisches Spritzen mit einer Flamme oder Plasma als Energieträger, Sol-Gel-Schichten oder ähnliches umfassen.

Neben metallischen Bipolarplatten sind weiterhin auch Bipolarplatten aus reinem Graphit oder einem Graphitverbund bekannt, wobei Fräsen, Heißpressen oder Spritzgießen zur Formgebung eingesetzt werden. Allerdings ist das Fügen der Platten unter Einhaltung elektrischer und thermischer Leitfähigkeit aufwändig.

### Beschreibung

Es kann daher als Aufgabe betrachtet werden, ein Verfahren zum Herstellen einer Bipolarplatte für eine elektrochemische Vorrichtung vorzuschlagen, bei der eine Bipolarplatte mit einem möglichst geringen Gewicht, möglichst kostengünstig und zuverlässig herstellbar ist.

Die Aufgabe wird gelöst durch ein Verfahren mit den Merkmalen des unabhängigen Anspruchs 1. Vorteilhafte Ausführungsformen und Weiterbildungen sind den Unteransprüchen und der nachfolgenden Beschreibung zu entnehmen.

Es wird ein Verfahren zum Herstellen einer Bipolarplatte für eine elektrochemische Vorrichtung vorgeschlagen, das Verfahren aufweisend Bereitstellen eines ersten Plattengrundkörpers und eines zweiten Plattengrundkörpers als Kohlestofffasern aufweisende Faserformkörper mit jeweils einer Fügefläche und einer davon abgewandten Nutzfläche, Infiltrieren der Plattengrundkörper mit mindestens einem Kohlenstoffallotropen, lokales Aufbringen von Silizium auf jeweilige Fügestellen in den Fügeflächen, Auflegen der Fügeflächen aufeinander, sodass die Fügestellen aufeinanderliegen und die Nutzflächen der beiden Plattengrundkörper voneinander abgewandt sind, und zumindest lokales Erhitzen der Fügestellen, sodass das Silizium aufschmilzt und mit angrenzendem Kohlenstoff zur Bildung einer Silizium-Kohlenstoff-Verbindung reagiert.

Die Faserformkörper sind hierbei im Wesentlichen ebene Plattenhälften. Sie können eine Randkontur aufweisen, die direkt an die erforderliche Größe der Bipolarplatte angepasst ist. Es ist allerdings denkbar, dass sich an den Schritt des Infiltrierens der Faserformkörper eine mechanische Endbearbeitung anschließt, bei der der Faserformkörper auf ein gewünschtes Endmaß gebracht wird.

Das Fasermaterial der Plattengrundkörper dient als Matrix bzw. Träger und wird dicht mit einem geeigneten Kohlenstoffallotropen infiltriert, sodass eine elektrisch und thermisch hochleitfähige und bevorzugt porenlose sowie fluiddichte Anordnung entsteht. Der mindestens eine Kohlenstoffallotrop kann Graphit, Graphenstrukturen, Fullerene oder anderes umfassen. Es ist denkbar, den Plattengrundkörper mit Graphit zu infiltrieren. Es kann sinnvoll sein, hierbei gegebenenfalls Graphenplättchen beizufügen, um die elektrische Leitfähigkeit weiter zu erhöhen.

Das Infiltrieren kann etwa durch chemische Dampfinfiltration durchgeführt werden. Die jeweilige Nutzfläche ist dabei die Fläche, in die später das Strömungsfeld integriert wird und zu der jeweiligen Membran-Elektroden-Anordnung gerichtet ist. Nach dem Infiltrieren können die Plattengrundkörper verpresst und/oder erhitzt oder auf andere Weise bearbeitet werden, um ihre Stabilität zu erhöhen.

Die Bipolarplatten könnten einerseits in einem ungesinterten Zustand belassen werden, sodass zwei Phasen entstehen. Je nach verwendeten Kohlenstoffallotropen könnten diese jedoch auch verpresst bzw. gehärtet werden. Alternativ kann sich ein Sintervorgang anschließen, wobei dann der hineininfiltrierte Kohlenstoffallotrop praktisch zu einem Vollmaterial versintert wird.

Es ist weiterhin denkbar, die Bipolarplatten vorab oder gegebenenfalls im selben Temperaturzyklus, zu versintern, um sie mittels Silizium verbinden zu können, um, eine höhere Temperaturbeständigkeit des hineininfiltrierten Kohlenstoffallotropen zu erreichen.

Ein Kernaspekt des erfindungsgemäßen Verfahrens liegt in dem lokalen Aufbringen von Silizium auf Fügestellen. Die Fügestellen können dabei insbesondere randseitig der Plattengrundkörper vorgesehen sein. Es ist denkbar, lediglich einen der beiden Plattengrundkörper mit Silizium zu versehen. Durch das Aufeinanderlegen der Plattengrundkörper geraten dann beide Plattengrundkörper mit dem Silizium in Kontakt.

Durch das zumindest lokale Erhitzen der Fügestellen schmilzt das Silizium auf und bildet mit dem angrenzenden Kohlenstoff eine Si-C bzw. SiSi-C-Verbindung. Diese verbindet die beiden Plattengrundkörper miteinander. Graphit und Kohlefasern weisen eine hohe Temperaturbeständigkeit auf, sodass sowohl ein randseitiges, als auch ein vollständiges Erhitzen der beiden Plattengrundkörper über die Schmelztemperatur von Silizium, die bei 1414°C liegt, für die Integrität der Plattengrundkörper unproblematisch ist.

Durch das erfindungsgemäße Verfahren wird eine Bipolarplatte hergestellt, die ein sehr geringes spezifisches Gewicht von etwa 2,3 g/cm³ aufweist, welches das spezifische Gewicht von aus metallischen Materialien hergestellten Bipolarplatten deutlich unterschreitet. Die hergestellte Bipolarplatte weist zudem eine gute elektrische und thermische Leitfähigkeit auf. Weiterhin ist sie unter den normalen Betriebsbedingungen der Brennstoffzelle vollkommen korrosionsfest. Die für die Herstellung verwendeten Materialien sind kostengünstig und industriell in großem Maßstab verfügbar. Die Bipolarplatte weist hervorragende thermische Eigenschaften und ein hohes Anisotropieverhältnis für die Wärmeleitfähigkeit auf. Durch Anpassung der Struktur der Faserformkörper sowie des Gehalts an Graphit könnten die thermischen Eigenschaften weiter optimiert werden.

Die Fügestellen könnten in radial außenliegenden Randbereichen der Plattengrundkörpern angeordnet sein. Die Plattengrundkörper werden daher an ihren Randbereichen miteinander verbunden. Die Randbereiche können als umlaufende streifenförmige Bereiche ausgebildet sein.

Das Silizium könnte als Draht und/oder als Pulver an den Fügestellen angeordnet werden. Der Draht könnte als ein umlaufender Draht mit einer oder mehreren Schlaufen realisiert sein. Weiterhin könnten auch einzelne, kürzere Drahtabschnitte an den Fügestellen angeordnet werden. Um ein anfängliches Haften des Siliziums, sei es in Form von Draht oder Pulver, an den Plattengrundkörpern zu realisieren, ist denkbar, ein Haftmittel zu verwenden, welches beim Verschweißen abgebaut wird und insbesondere verdampft.

Es ist denkbar, dass das zumindest lokale Erhitzen das Einbringen der Anordnung aus Plattengrundkörpern und Silizium in einen Ofen und das Erhitzen mittels des Ofens umfasst. Folglich wird die gesamte, die Bipolarplatte ausbildende Anordnung in einem Ofen erhitzt, sodass lokal an den Fügestellen das Silizium aufschmilzt und zu einer Verbindung der beiden Plattengrundkörper führt. Damit kann eine gleichmäßige Erwärmung garantiert werden, sodass eine gleichmäßige Verbindung zwischen den Plattengrundkörpern erfolgt.

Das zumindest lokale Erhitzen könnte allerdings auch das lokale Erhitzen zumindest der Fügestellen mit einem Laser oder einem Plasmastrahl umfassen. Der Laser- oder Plasmastrahl kann außen über einen Randbereich geführt werden, sodass der dem Laser- oder Plasmastrahl ausgesetzte Plattengrundkörper erwärmt wird und das Silizium durch Wärmeleitung erwärmt und aufgeschmolzen wird.

Das lokale Erhitzen könnte das Erhitzen eines umlaufenden Randabschnitts der Anordnung aus Plattengrundkörpern und Silizium umfassen. Der Randabschnitt könnte aus radialer oder axialer Richtung oder einer Kombination hieraus mit Wärme beaufschlagt werden. Eine Wärmequelle kann folglich axial oder radial dem Randabschnitt folgen.

Das Verfahren kann ferner das Einbringen von Strömungskanälen in die Nutzflächen aufweisen. Damit werden die Strömungsfelder ausgeformt. Die Strömungskanäle können mäanderförmig über die beiden Nutzflächen verteilt werden und einen Anschlussbereich umfassen, über den eine Fluidverbindung mit einer externen Fluidquelle oder Fluidsenke herstellbar ist.

Das Einbringen von Strömungskanälen könnte durch mindestens ein Abtragverfahren durchgeführt werden, das aus einer Gruppe von Abtragverfahren ausgewählt ist, die Gruppe aufweisend mechanische Abtragverfahren, Funkenerosion, ablatives Plasmaverfahren, und ablatives Laserverfahren. Die Verfahren weisen unterschiedliche Vorteile auf und können je nach Größe, Feinheit, Anzahl der anzufertigen Strömungskanäle und dergleichen ausgewählt werden.

Das Verfahren könnte ferner das Aufbringen einer elektrisch leitfähigen Beschichtung auf den Nutzflächen umfassen. Diese Beschichtung könnte alpha-C umfassen.

Wie vorangehend erläutert könnten die Plattengrundkörper mit Graphit infiltriert werden, um eine hohe elektrische Leitfähigkeit zu erreichen.

Es ist sinnvoll, wenn zusätzlich Graphenplättchen in den Plattengrundkörper eingebracht werden, um die elektrische Leitfähigkeit weiter zu erhöhen.

Die Erfindung betrifft ferner eine Bipolarplatte, die nach dem vorangehend genannten Verfahren hergestellt ist. Folglich wird eine Bipolarplatte definiert, die einen ersten Plattengrundkörper und einen zweiten Plattengrundkörper aufweist, die als Kohlestofffasern aufweisende Faserformkörper mit jeweils einer Fügefläche und einer davon abgewandten Nutzfläche, ausgebildet und mit mindestens einem Kohlenstoffallotropen infiltriert sind, wobei die beiden Plattengrundkörper mittels aufgeschmolzenem Silizium an Fügestellen zusammengefügt sind.

Ferner betrifft die Erfindung die Verwendung von Silizium zum Verschweißen zweier Plattengrundkörper aus einem mit mindestens einem Kohlenstoffallotropen infiltrierten, Kohlestofffasern aufweisende Faserformkörper zum Ausbilden einer Bipolarplatte.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1: eine schematische Darstellung eines Verfahrens zum Herstellen einer Bipolarplatte gemäß einem Ausführungsbeispiel.
- Fig. 2: eine schematische Darstellung zweier Plattengrundkörper zum Ausbilden einer Bipolarplatte.
- Fig. 3: eine schematische Seitenansicht einer Bipolarplatte gemäß einem Ausführungsbeispiel.

### Detaillierte Beschreibung von Ausführungsbeispielen

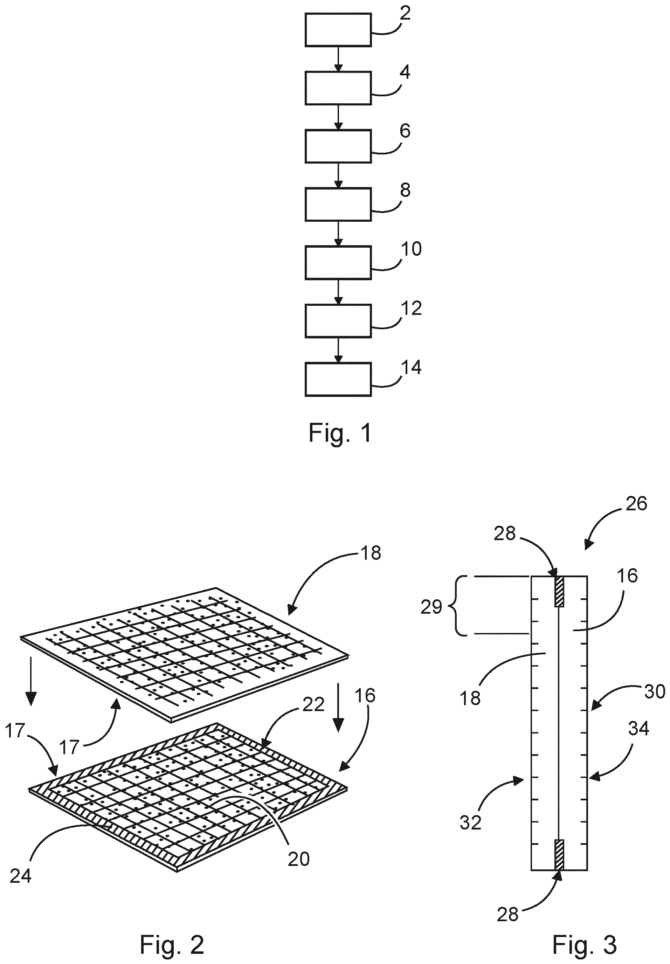

Fig. 1 zeigt ein Verfahren zum Herstellen einer Bipolarplatte für eine elektrochemische Vorrichtung. Das Verfahren weist die Schritte des Bereitstellens 2 eines ersten Plattengrundkörpers und eines zweiten Plattengrundkörpers als Kohlestofffasern aufweisende Faserformkörper mit jeweils einer Fügefläche und einer davon abgewandten Nutzfläche, des Infiltrierens 4 der Plattengrundkörper mit mindestens einem Kohlenstoffallotropen, des lokalen Aufbringens 6 von Silizium auf jeweilige Fügestellen in den Fügeflächen, des Auflegens 8 der Fügeflächen aufeinander, sodass die Fügestellen aufeinanderliegen und die Nutzflächen der beiden Plattengrundkörper voneinander abgewandt sind, und des zumindest lokalen Erhitzens 10 der Fügestellen, sodass das Silizium aufschmilzt und mit angrenzendem Kohlenstoff zur Bildung von einer Silizium-Kohlenstoff-Verbindung reagiert. Das Verfahren kann zumindest optional den Schritt des Einbringens 12 von Strömungskanälen in die Nutzflächen aufweisen. Das Infiltrieren kann das Infiltrieren mit Graphit umfassen. Zusätzlich können auch Graphenplättchen eingebracht werden. Das Verfahren kann ferner den Schritt des Aufbringens 14 einer Beschichtung auf den Nutzflächen umfassen.

Fig. 2 zeigt einen ersten Plattengrundkörper 16 und einen zweiten Plattengrundkörper 18, die jeweils als Kohlenstofffasern aufweisende Faserformkörper ausgebildet sind. Beide Plattengrundkörper 16 und 18 sind mit einem Kohlenstoffallotropen 20 infiltriert, beispielsweise Graphit und optional zusätzlich Graphenplättchen. Beide Plattengrundkörper 16 und 18 weisen eine Fügefläche 17 auf, an denen jeweils Fügestellen 22 randseitig vorgesehen sind. Auf den Fügestellen 22 ist Silizium 24 aufgebracht, beispielsweise in Form von Pulver oder Draht. Die Plattengrundkörper 16 und 18 werden mit ihren Fügestellen 22 aufeinandergelegt, sodass die Fügeflächen 17 zueinander gerichtet sind. Dies ist durch Bewegungspfeile angedeutet. Ein anschließendes Erhitzen führt zum Aufschmelzen des Siliziums 24, sodass eine Silizium-Kohlenstoff-Verbindung mit angrenzendem Kohlenstoff hergestellt wird. Die beiden Plattengrundkörper 16 und 18 werden dadurch fluiddicht miteinander verbunden.

Dadurch ergibt sich eine in Fig. 3 dargestellte Bipolarplatte 26. Das aufgeschmolzene Silizium 24 ist hier als eine Schweißverbindung 28 angedeutet. Diese befindet sich im Bereich eines umlaufenden Randabschnitts 29, der zum Aufschmelzen des Siliziums 24 selektiv erhitzt werden kann. Alternativ dazu kann, wie vorangehend erläutert, auch die gesamte Anordnung aus Plattengrundkörpern 16 und 18 sowie Silizium 24 in einem Ofen erhitzt werden, sodass sich die hier abgebildete Schweißverbindung 28 ergibt.

An einer ersten Nutzfläche 30 des ersten Plattengrundkörper 16 und einer zweiten Nutzfläche 32 des zweiten Plattengrundkörpers 18, die jeweils von den Fügeflächen 17 abgewandt sind, sind jeweils Strömungskanäle 34 vorgesehen. Diese können durch mechanische Abtragverfahren, Funkenerosion, ablatives Plasmaverfahren, oder ablatives Laserverfahren in die Nutzflächen 30 und 32 eingebracht sein.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 2: Bereitstellen
- 4: Infiltrieren
- 6: lokales Aufbringen
- 8: Auflegen
- 10: lokales Erhitzen
- 12: Einbringen
- 14: Aufbringen
- 16: erster Plattengrundkörper
- 17: Fügefläche
- 18: zweiter Plattengrundkörper
- 20: Kohlenstoffallotrop
- 22: Fügestelle
- 24: Silizium
- 26: Bipolarplatte
- 28: Schweißverbindung
- 29: Randabschnitt
- 30: erste Nutzfläche
- 32: zweite Nutzfläche
- 34: Strömungskanal

## Patentansprüche

1. Verfahren zum Herstellen einer Bipolarplatte für eine elektrochemische Vorrichtung, aufweisend:
- Bereitstellen (2) eines ersten Plattengrundkörpers (16) und eines zweiten Plattengrundkörpers (18) als Kohlestofffasern aufweisende Faserformkörper mit jeweils einer Fügefläche (17) und einer davon abgewandten Nutzfläche (30, 32),
- Infiltrieren (4) der Plattengrundkörper (16, 18) mit mindestens einem Kohlenstoffallotropen (20),
- Lokales Aufbringen (6) von Silizium (24) auf jeweilige Fügestellen (22) in den Fügeflächen (17),
- Auflegen (8) der Fügeflächen (17) aufeinander, sodass die Fügestellen (22) aufeinanderliegen und die Nutzflächen (30, 32) der beiden Plattengrundkörper (16, 18) voneinander abgewandt sind, und
- zumindest lokales Erhitzen (10) der Fügestellen (22), sodass das Silizium (24) aufschmilzt und mit angrenzendem Kohlenstoff zur Bildung einer Silizium-Kohlenstoff-Verbindung reagiert.

2. Verfahren nach Anspruch 1,
wobei die Fügestellen (22) in radial außenliegenden Randbereichen der Plattengrundkörpern (16, 18) angeordnet sind.

3. Verfahren nach Anspruch 1 oder 2,
wobei das Silizium (24) als Draht und/oder als Pulver an den Fügestellen (22) angeordnet wird.

4. Verfahren nach einem der vorhergehenden Ansprüche,
wobei das zumindest lokale Erhitzen (10) das Einbringen der Anordnung aus Plattengrundkörpern (16, 18) und Silizium (24) in einen Ofen und das Erhitzen mittels des Ofens umfasst.

5. Verfahren nach einem der Ansprüche 1 bis 3,
wobei das zumindest lokale Erhitzen (10) das lokale Erhitzen zumindest der Fügestellen (22) mit einem Laser oder einem Plasmastrahl umfasst.

6. Verfahren nach Anspruch 2,
wobei das lokale Erhitzen (10) das Erhitzen eines umlaufenden Randabschnitts (29) der Anordnung aus Plattengrundkörpern (16, 18) und Silizium (24) umfasst.

7. Verfahren nach einem der vorhergehenden Ansprüche,
ferner aufweisend das Einbringen (12) von Strömungskanälen (24) in die Nutzflächen (30, 32).

8. Verfahren nach Anspruch 7,
wobei das Einbringen (12) von Strömungskanälen (34) durch mindestens ein Abtragverfahren durchgeführt wird, das aus einer Gruppe von Abtragverfahren ausgewählt ist, die Gruppe aufweisend:
- mechanische Abtragverfahren,
- Funkenerosion,
- ablatives Plasmaverfahren, und
- ablatives Laserverfahren.

9. Verfahren nach einem der vorhergehenden Ansprüche,
ferner aufweisend Aufbringen (14) einer Beschichtung auf den Nutzflächen (30, 32).

10. Verfahren nach einem der vorhergehenden Ansprüche,
wobei die Plattengrundkörper (16, 18) mit Graphit infiltriert werden.

11. Verfahren nach Anspruch 10,
wobei die Plattengrundkörper (16, 18) zusätzlich mit Graphenplättchen infiltriert werden.

12. Bipolarplatte (26), die nach dem Verfahren der Ansprüche 1 bis 11 hergestellt ist.

13. Verwendung von Silizium (24) zum Verschweißen zweier Plattengrundkörper (16, 18) aus einem mit mindestens einem Kohlenstoffallotropen (20) infiltrierten, Kohlestofffasern aufweisende Faserformkörper zum Ausbilden einer Bipolarplatte (26).
